# EUROPEAN PATENT SPECIFICATION

(11) **EP 3 202 722 B1**
(45) Date of publication and mention of the grant of the patent: **14.08.2019**
(21) Application number: 15847733.1
(22) Date of filing: 30.09.2015
(51) Int. Cl.: C03B 5/225, C03B 5/182, C03B 5/26

(54) **GLASS MELT PRODUCTION DEVICE, GLASS MELT PRODUCTION METHOD, GLASS ARTICLE PRODUCTION DEVICE, AND GLASS ARTICLE PRODUCTION METHOD**
GLASSCHMELZEHERSTELLUNGSVORRICHTUNG, GLASSCHMELZEHERSTELLUNGSVERFAHREN, GLASARTIKELHERSTELLUNGSVORRICHTUNG UND GLASARTIKELHERSTELLUNGSVERFAHREN
DISPOSITIF DE PRODUCTION DE VERRE FONDU, PROCÉDÉ DE PRODUCTION DE VERRE FONDU, DISPOSITIF DE PRODUCTION D'UN OBJET EN VERRE ET PROCÉDÉ DE PRODUCTION D'UN OBJET EN VERRE

(30) Priority: 30.09.2014 JP 2014201495
(43) Date of publication of application: 09.08.2017
(73) Proprietor: AGC Inc., Tokyo 100-8405 (JP)
(72) Inventor: HAMAMOTO, Hiroaki, Tokyo 100-8405 (JP); KOBAYASHI, Suguru, Tokyo 100-8405 (JP); SASAKI, Michito, Tokyo 100-8405 (JP); KUBO, Takashi, Tokyo 100-8405 (JP); MIYOSHI, Wataru, Tokyo 100-8405 (JP); NINOMIYA, Kazuo, Tokyo 100-8405 (JP)
(74) Representative: Müller-Boré & Partner Patentanwälte PartG mbB
(86) International application number: PCT/JP2015/077709
(87) International publication number: WO 2016/052608

(56) References cited:
- WO-A1-2009/107531
- JP-A- H0 333 020
- JP-A- 2003 089 529
- JP-B2- 3 150 726
- US-A- 5 849 058
- US-A1- 2013 233 023

## Description

The present invention relates to a glass melt production apparatus, a glass melt production method, a glass product production apparatus, and a glass product production method.

A glass plate to be used for buildings, for vehicles, for flat panel displays, etc., is produced by heating and melting a raw material prepared in a predetermined blend ratio in a melting vessel to obtain a glass melt, followed by refining the glass melt and forming it into a glass plate having a predetermined thickness e.g. by a float process, and cutting the obtained glass plate into a predetermined shape.

Refining is an operation to remove bubbles remaining in the glass melt to make the glass melt homogenous and is carried out to improve the quality of a glass plate to be produced. As a refining means, a vacuum degassing apparatus has been known, the interior of which is maintained at a predetermined degree of vacuum. In the vacuum degassing apparatus, bubbles in the glass melt continuously flowing therein are made to grow and to float up in the glass melt by employing their buoyancy, and are broken at the surface of the glass melt to be removed. Patent Document 1 discloses an example of such a vacuum degassing apparatus. Fig. 6 is a schematic sectional view illustrating the vacuum degassing apparatus in Patent Document 1.

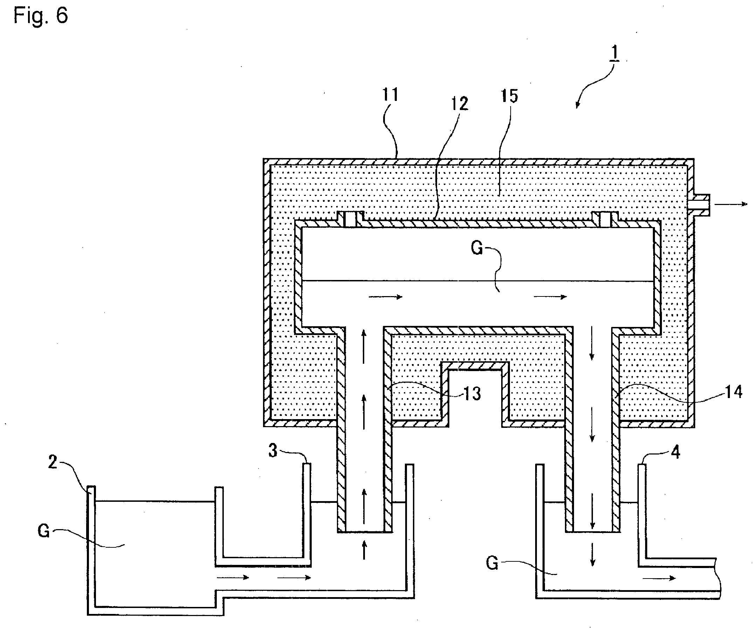

The vacuum degassing apparatus 1 shown in Fig. 6 is used to a process of vacuum degassing a glass melt G in a melting vessel 2 and continuously supplying the glass melt to a successive treatment vessel. The vacuum degassing apparatus 1 has a vacuum degassing vessel 12 horizontally housed in a vacuum housing 11 which is evacuated of air by a vacuum pump etc. (not shown) to be depressurized therein, and has an uprising pipe 13 and a downfalling pipe 14 housed in both ends thereof so as to extend vertically downward. The uprising pipe 13 has a lower end immersed in the glass melt G in an upstream pit 3 which communicates with a melting vessel 2, and has an upper end communicating with the vacuum degassing vessel 12 such that the glass melt G before degassing is drawn up from the upstream pit 3 into the vacuum degassing vessel 12. The downfalling pipe 14 similarly has a lower end immersed in the glass melt G in a downstream pit 4 which communicates with a successive treatment vessel (not shown, such as a forming vessel for forming the glass melt G into a glass plate), and has an upper end communicating with the vacuum degassing vessel 12 such that the glass melt G after degassing is drawn down from the vacuum degassing vessel 12 and is led out to the downstream pit 4. In the vacuum housing 11, a heat-insulating material 15, such as bricks for thermal insulation, is provided around the vacuum degassing vessel 12, the uprising pipe 13 and the downfalling pipe 14.

Patent Document 1 discloses that the vacuum degassing vessel 12, the uprising pipe 13 and the downfalling pipe 14 forming the vacuum degassing apparatus 1 are made of a platinum alloy (platinum-rhodium alloy). When these constituent members are made of a refractory material (such as electro-cast bricks) less expensive than a noble metal, such as a platinum alloy, it is possible to make such constituent members large, for example, it is possible to increase their diameters such that a vacuum degassing apparatus with a large capacity can be built.

When the vacuum degassing apparatus 1 shown in Fig. 6 is brought into a state where the depressurized state in the vacuum housing 11 is lost by trouble, such as a vacuum pump failure (hereinbelow, referred to as "the event of loss of depressurization" in Description), the pressure on the surface of the glass melt G in the vacuum degassing vessel 12 lowers. This causes the glass melt G in the vacuum degassing vessel 12 to flow down into the upstream pit 3 and the downstream pit 4 via the uprising pipe 13 and the downfalling pipe 14, respectively.

When the event of loss of depressurization causes the glass melt G to flow out from the inside of the vacuum degassing vessel 12, the liquid level of the glass melt G in each of the upstream pit 3 and the downstream pit 4 is elevated. In response to an elevation in the liquid level of the glass melt G, a part of the glass melt G in the upstream pit 3 moves upstream, i.e. toward the melting vessel 2 while a part of the glass melt G in the downstream pit 4 moves downstream, i.e. toward the successive treatment vessel (not shown).

The move of the glass melt G upstream from the upstream pit 3 causes little problem because the volume of the melting vessel 2 existing upstream is normally sufficiently large enough to accept such an elevation in the liquid level due to the move of the glass melt G.

On the other hand, the move of the glass melt G downstream from the downstream pit 4 normally causes no problem because the successive treatment vessel (not shown) is equipped with a drain-out system for draining an excessive part of the glass melt G. In a case where the downstream pit etc. has no drain-out system equipped therewith, or a case where the vacuum degassing vessel 12 is made large to build a large flow rate of vacuum degassing apparatus, the glass melt G flowing down from the inside of the vacuum degassing vessel 12, however, increases in the event of loss of depressurization. In such a case, the flow-down amount of the glass melt G could exceed the processing capacity of the drain-out system equipped with the successive treatment vessel (not shown) such that the glass melt G overflows. The occurrence of overflowing of the glass melt G in the successive treatment vessel (not shown) should be avoided because of possibly leading to the shutdown of glass product production equipment.
Patent Document 1: JP-A-2006-306662

Under these circumstances, it is an object of the present invention to reduce the influence caused by the flow-down of a glass melt from a vacuum degassing vessel in the event of loss of depressurization.

The present invention provides a glass melt production apparatus, which comprises a melting vessel, a vacuum degassing apparatus, a first conducting pipe structure connecting the melting vessel and the vacuum degassing apparatus, and a second conducting pipe structure to introduce a glass melt to a forming means, provided downstream the vacuum degassing apparatus;
the vacuum degassing apparatus having an uprising pipe through which the glass melt from the melting vessel ascends, a vacuum degassing vessel, and a downfalling pipe through which the glass melt from the vacuum degassing vessel descends;
the first conducting pipe structure having an upstream pit to supply the glass melt to the uprising pipe; and
the second conducting pipe structure having a downstream pit containing the glass melt from the downfalling pipe;
the glass melt production apparatus further comprising a third conducting pipe structure connecting the upstream pit and the downstream pit; and
the third conducting pipe structure having a closing means to shut off a flow of the glass melt in the third conducting pipe structure, the third conducting pipe structure or the closing means having a glass melt flow path for emergencies, which allows the glass melt to pass therethrough and further guide the glass melt to the upstream pit, depending on the height of a liquid level of the glass melt in the third conducting pipe structure in the vicinity of the closing means.

In the glass melt production apparatus according to one mode of the present invention, it is preferred that a glass melt flow path in each of the uprising pipe, the vacuum degassing vessel and the downfalling pipe be made of a refractory material.

In the glass melt production apparatus according to one mode of the present invention, it is preferred that the third conducting pipe structure be partly configured in a stepped structure in a direction of the flow of the glass melt to have a first glass melt flow path and a second glass melt flow path having different bottom heights, that the closing means be a plate-shape product insertable/removable into/from the first glass melt flow path of the third conducting pipe structure, that the plate-shape product have a planar shape formed in substantially the same as the cross sectional shape of the first glass melt flow path, and that the second glass melt flow path serve as the glass melt flow path for emergencies.

In the glass melt production apparatus according to one mode of the present invention, it is preferred that the third conducting pipe structure have a first glass melt flow path, that the closing means be a plate-shape product insertable/removable into/from the first glass melt flow path of the third conducting pipe structure, that the plate-shape product have a planar shape formed in substantially the same as the cross sectional shape of the first glass melt flow path, and that the plate-shape product have an opening formed therein so as to serve as the glass melt flow path for emergencies.

In the glass melt production apparatus according to one mode of the present invention, it is preferred that the glass melt production apparatus further comprise a drain-out system in the third conducting pipe structure, which works, depending on the height of a liquid level of the glass melt in the third conducting pipe structure.

In the glass melt production apparatus according to one mode of the present invention, it is preferred that the vacuum degassing vessel be configured to be depressurized therein through a pipe by use of a vacuum pump, and that a shut-off valve be disposed in the pipe connecting the vacuum pump and the vacuum degassing vessel.

In the glass melt production apparatus according to one mode of the present invention, it is preferred that the vacuum degassing vessel be configured to be depressurized therein through a pipe by use of a vacuum pump, that a tank be disposed so as to be kept depressurized therein by driving the vacuum pump, and that a shut-off valve be disposed in a pipe connecting the tank and the vacuum degassing vessel.

Further, according to one mode of the present invention, there is provided a glass product production apparatus, which comprises the glass melt production apparatus of the present invention, a forming means to form the glass melt into a formed product, and an annealing means to anneal the formed product to obtain a glass product.

The present invention further provides a glass melt production method, which employs a glass melt production apparatus comprising a melting vessel, a vacuum degassing apparatus, a first conducting pipe structure connecting the melting vessel and the vacuum degassing apparatus, and a second conducting pipe structure to introduce a glass melt to a forming means, provided downstream the vacuum degassing apparatus;
the vacuum degassing apparatus having an uprising pipe through which the glass melt from the melting vessel ascends, a vacuum degassing vessel, and a downfalling pipe through which the glass melt from the vacuum degassing vessel descends;
the first conducting pipe structure having an upstream pit to supply the glass melt to the uprising pipe; and
the second conducting pipe structure having a downstream pit containing the glass melt from the downfalling pipe;
the glass melt production apparatus further including a third conducting pipe structure connecting the upstream pit and the downstream pit;
the third conducting pipe structure having a closing means to shut off a flow of the glass melt in the third conducting pipe structure; and the third conducting pipe structure or the closing means having a glass melt flow path for emergencies, which allows the glass melt to pass therethrough and further guide the glass melt to the upstream pit, depending on the height of a liquid level of the glass melt in the third conducting pipe structure in the vicinity of the closing means;
the glass melt production method comprising introducing the glass melt to the third conducting pipe structure when the glass melt flows down through the uprising pipe and the downfalling pipe by a decrease in the degree of depressurization in the vacuum degassing vessel during production of the glass melt, and performing flow control to reduce the move of the glass melt from the downstream pit further downstream beyond the downstream pit.

In one mode of the glass melt production method according to the present invention, it is preferred that the glass melt pass through a glass melt flow path for emergencies, depending on the height of a liquid level of the glass melt, to reduce the move of the glass melt.

Further, according to one mode of the glass melt production method according to the present invention, there is provided a glass product production method, which comprises a step of producing a glass melt by use of the glass melt production method according to the present invention, a step of forming the glass melt into a formed product, and a step of annealing the formed product to obtain a glass product.

In accordance with the glass melt production apparatus according to the present invention, in the event of loss of depressurization, it is possible to reduce the move of a glass melt downstream from the downstream pit by introducing the glass melt into the third conducting pipe structure out of use in normal operation of the glass melt production apparatus after the glass melt flows down from the vacuum degassing vessel into the downstream pit. Even if the glass melt moves downstream from the downstream pit in a large volume, it is possible to prevent the glass melt from overflowing in a case where the downstream pit etc. has no drain-out system equipped therewith, or a case where the flow-down amount of the glass melt exceeds the processing capacity of the drain-out system equipped with the successive treatment vessel (not shown in the drawings).

In accordance with the glass melt production apparatus according to the present invention, it is possible to open the glass melt flow path for emergencies for guiding the glass melt into the third conducing pipe structure, depending on the height of a liquid level of the glass melt in the vicinity of the closing means for shutting off the flow of the glass melt in the third conducting pipe structure.

### BRIEF DESCRIPTION OF DRAWINGS

Fig. 1 is a side sectional view illustrating the glass melt production apparatus according to an embodiment of the present invention.
Fig. 2 is a front sectional view illustrating a portion of a third conducting pipe structure 500 shown in Fig. 1, where a closing means 510 is provided, as observed from the downstream side of a glass melt G in a direction of flow.
Fig. 3 is a partial enlarged view illustrating a portion of a third conducting pipe structure 500 shown in Fig. 1, where the closing means 510 is provided, as observed from upward, except that an upper wall of the third conducting pipe structure 500 is not shown for simplification.
Fig. 4 is a view similar to Fig. 2 except that a glass melt flow path for emergencies has a different structure from that shown in Fig. 2.
Fig. 5 is a flow chart illustrating the glass product production method according to an embodiment of the present invention.
Fig. 6 is a side sectional view illustrating the vacuum degassing apparatus in Patent Document 1.

Now, the present invention will be described with reference to drawings.

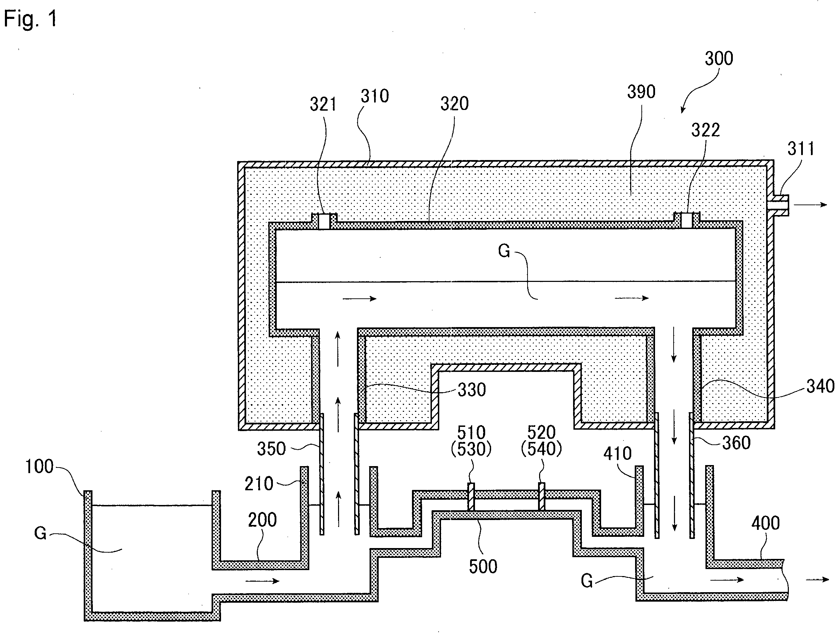

The glass melt production apparatus shown in Fig. 1 comprises a melting vessel 100 for melting a glass material to obtain a glass melt G; a vacuum degassing apparatus 300, the interior of which is maintained in a reduced pressure atmosphere such that bubbles in the glass melt G supplied from the melting vessel 100 are made to float up, broken and removed; a first conducting pipe structure 200 connecting the melting vessel 100 and the vacuum degassing apparatus 300; and a second conducting pipe structure 400, which is provided downstream the vacuum degassing apparatus 300 and introduces the glass melt G to a forming means (not shown).

The glass melt G obtained in the melting vessel 100 shown in Fig. 1 is supplied via the first conducting pipe structure 200 to the vacuum degassing apparatus 300.

The vacuum degassing apparatus 300 shown in Fig. 1 has a vacuum housing 310 which is made of a metal, such as stainless steel, and the interior of which is maintained in a reduced pressure state at a time of operation. The vacuum housing 310 has a suction port 311 formed in a portion thereof located at an upper right position in Fig. 1 to reduce the pressure in the interior by vacuum suction.

The vacuum housing 310 has a vacuum degassing vessel 320 accommodated therein so that its long axis is in a horizontal direction. The vacuum degassing vessel 320 has suction ports 321 and 322 formed in an upper part thereof to communicate with the vacuum housing 310 so as to reduce the pressure in the vacuum degassing vessel 320 and maintain the reduced pressure at a predetermined pressure by vacuum suction of the vacuum housing 310 by use of, e.g. a vacuum pump (not shown).

The vacuum degassing vessel 320 has an uprising pipe 330 and a downfalling pipe 340 attached to a lower face of an end side thereof and a lower face of the other end side thereof, respectively, so as to vertically extend therefrom. The flow path of the glass melt G in each of the vacuum degassing vessel 320, the uprising pipe 330 and the downfalling pipe 340 is made of a refractory material.

The uprising pipe 330 has a lower end immersed in the glass melt G in an upstream pit 210 provided on a downstream end of the first conducting pipe structure 200 such that the glass melt G before degassing is drawn up from the upstream pit 210 to be introduced into the vacuum degassing vessel 320. The downfalling pipe 340 has a lower end immersed in the glass melt G in a downstream pit 410 provided on an upstream end of the second conducting pipe structure 400 such that the glass melt G after degassing is made to descend from the vacuum degassing vessel 320 to be introduced to the downstream pit 410.

The vacuum degassing apparatus 300 shown has extension tubes 350 and 360 attached to lower ends (lower leading ends) of the uprising pipe 330 and the downfalling pipe 340, respectively. The extension tubes 350 and 360 are hollow cylinders made of platinum or a platinum alloy, and such extension tubes 350 and 360 are respectively immersed in the glass melt G in the upstream pit 210 and the glass melt G in the downstream pit 410. However, in the vacuum degassing apparatus according to the present invention, the extension tubes attached to the lower ends of the uprising pipe and the downfalling pipe are optional constituents. The uprising pipe and the downfalling pipe may be made of a refractory material and be respectively immersed in the glass melt in the upstream pit and the glass melt G in the downstream pit.

The uprising pipe and the downfalling pipe per se may be hollow cylinders made of platinum or a platinum alloy. In a case where hollow cylinders made of platinum or a platinum alloy can be made large in diameter to build a large flow rate of vacuum degassing apparatus, when the glass melt production apparatus according to the present invention is not used, the glass melt G could overflow in the event of loss of depressurization.

The vacuum housing 310 has a heat-insulating material 390 disposed around each of the vacuum degassing vessel 320, the uprising pipe 330 and the downfalling pipe 340 therein.

The glass melt production apparatus shown in Fig. 1 has a third conducting pipe structure 500 connecting the upstream pit 210 and the downstream pit 410. In order to introduce the glass melt G to the vacuum degassing vessel 320 by vacuum to set up the vacuum degassing apparatus 300, the glass melt G needs to be present not only in the upstream pit 210 but also in the downstream pit 410. Therefore, at the time of setting up the vacuum degassing apparatus 300, the third conducting pipe structure 500 is utilized as a by-pass such that the glass melt G is supplied from the upstream pit 210 to the downstream pit 410.

The vacuum degassing apparatus 300 has closing means 510 and 520 disposed in the third conducting pipe structure 500 to shut off the flow of the glass melt G in the third conducting pipe structure 500 in normal operation. The closing means 510 and 520 are means for opening and closing the flow path of the glass melt G in the third conducting pipe structure 500 by arbitrary operation. In Fig. 1, the closing means 510 and 520 can be activated to close the flow path of the glass melt G in the third conducting pipe structure 500 to shut off the flow of the glass melt G in the third conducting pipe structure 500.

Although the two closing means 510 and 520 are disposed in the third conducting pipe structure 500 in the vacuum degassing apparatus 300 shown in Fig. 1, the number of the closing means disposed in the third conducting pipe structure is not limited to two. For example, when the third conducting pipe structure is short, a single closing means may be disposed at an intermediate position in the third conducting pipe structure.

The closing means may be disposed at any other position than the shown positions as long as it is possible to shut off the flow of the glass melt G in the third conducting pipe structure 500. For example, the closing means may be disposed at a more upstream position or downstream position in the third conducting pipe structure 500 than those shown in this Figure.

Specific structure of the closing means 510 and 520 will be described later on.

When the event of loss of depressurization occurs in the vacuum degassing apparatus 300 shown in Fig. 1, the glass melt G is introduced into the third conducting pipe structure 500 to reduce the move of the glass melt downstream from the downstream pit 410 after having flowed down from the downfalling pipe 340 of the vacuum degassing vessel 320 into the downstream pit 410.

For this purpose, the third conducting pipe structure 500 has a glass melt flow path for emergencies 540 disposed therein in the vicinity of the closing means 520 shown in Fig. 1 such that the glass melt G is allowed to pass through, depending on the height of a liquid level of the glass melt G in the vicinity of the closing means 520 in the third conducting pipe structure 500. The glass melt flow path for emergencies 540 is measured to guide the glass melt G via the third conducting pipe structure 500 into the upstream pit 210 after having flowed down from the downfalling pipe 340 of the vacuum degassing vessel 320 into the downstream pit 410.

When the loss of depressurization occurs at the vacuum degassing apparatus 300 shown in Fig. 1, the liquid level of the glass melt G in the downstream pit 410 is elevated by the glass melt G that has flowed down through the downfalling pipe 340 of the vacuum degassing vessel 320. This causes the glass melt G to also move toward the third conducting pipe structure 500 connected with the downstream pit 410 such that the liquid level of the glass melt G in the third conducting pipe structure 500 is elevated in the vicinity of the closing means 520. When the liquid level of the glass melt G in the third conducting pipe structure 500 reaches a certain height in the vicinity of the closing means 520, the glass melt G is allowed to pass through the glass melt flow path for emergencies 540 such that the glass melt G is introduced into between the closing means 510 and the closing means 520.

The third conducting pipe structure 500 also has a glass melt flow path for emergencies 530 disposed to pass the glass melt G therethrough, depending on the height of the liquid level of the glass melt G in the third conducting pipe structure 500 in the vicinity of the closing means 510. The glass melt flow path for emergencies 540 is measured to further guide the glass melt G to the upstream pit 210, the glass melt having been guided into the third conducting pipe structure 500 through the glass melt flow path for emergencies 540 disposed in the closing means 520. When a large amount of the glass melt G is introduced into the third conducting pipe structure 500 through the glass melt flow path for emergencies 540 disposed in the closing means 520, the glass melt G could overflow since the introduced amount of the glass melt exceeds the capacity of the third conducting pipe structure 500. In such a case, the glass melt G introduced into the third conducting pipe structure 500 is further introduced into the upstream pit 210 through the glass melt flow path for emergencies 530 disposed in the vicinity of the closing means 510 to prevent the glass melt G from overflowing in the third conducting pipe structure 500.

The glass melt G, which has been introduced into the third conducting pipe structure 500 through the glass melt flow path for emergencies 540, elevates the liquid level of the glass melt G in the third conducting pipe structure 500 in the vicinity of the closing means 510. When the height of the liquid level of the glass melt G reaches the certain height in the third conducting pipe structure 500 in the vicinity of the closing means 510, the glass melt G is allowed to pass through the glass melt flow path for emergencies 530 such that the glass melt G in the third conducting pipe structure 500 is introduced into the upstream pit 210.

Specific structures of the glass melt flow paths for emergencies 530 and 540 and the closing means 510 and 520 related thereto will be described below.

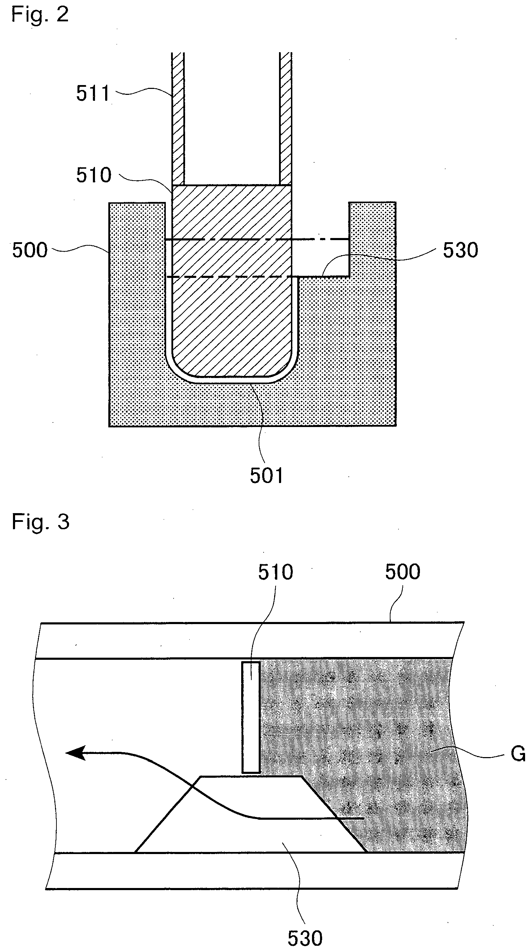

Although a portion of the third conducting pipe structure 500 with the closing means 510 disposed therein is shown in Figs. 2 and 3, a portion of the third conducting pipe structure 500 with the closing means 520 disposed therein also has a similar structure.

As shown in Figs. 2 and 3, in particular Fig. 2, the third conducting pipe structure 500 is configured in a stepped structure to have a first glass melt flow path 501 and a second glass melt flow path 530 having different bottom heights in the portion thereof with the closing means 510 disposed therein. As shown in Fig. 3, the second glass melt flow path 530 is disposed only at the portion of the third conducting pipe structure 500 with the closing means 510 disposed therein.

As shown in Figs. 2 and 3, the closing means 510 is a plate-shape product, and is inserted into the first glass melt flow path 501 in the third conducting pipe structure 500 from above.

As shown in Fig. 2, the closing means 510 has an operating member 511 formed on a top portion thereof such that the operating member is utilized when the closing means 510 is inserted in the first glass melt flow path 501 of the third conducting pipe structure 500 and when the closing means 510 is removed from the first glass melt flow path 501 of the third conducting pipe structure 500. The third conducting pipe structure 500 has an opening (not shown) formed in an upper portion for insertion of the closing means 510. It should be noted that the plate-shape product forming the closing means 510 is made of a refractory material since the plate-shape product is inserted into the flow path of the glass melt G in the third conducting pipe structure 500. The closing means 510 may be made of refractory metal by having a cooling structure, such as a water cooling system, added thereto.

At the time of setting up the vacuum degassing apparatus 300, the operating member 511 is activated to draw the closing means 510 upward such that the first glass melt flow path 501 is opened in the third conducting pipe structure 500. Thus, the glass melt G is allowed to pass through the third conducting pipe structure 500 such that the glass melt G is supplied from the upstream pit 210 to the downstream pit 410.

In normal operation of the vacuum degassing apparatus 300, the operating member 511 is activated to insert the closing means 510 into the first glass melt flow path 501 of the third conducting pipe structure 500 from upward (the direction indicated by the arrow) such that the first glass melt flow path 501 is closed in the third conducting pipe structure 500. Thus, the flow of the glass melt G is shut off in the third conducting pipe structure 500.

In order to close the first glass melt flow path 501 in the third conducting pipe structure 500 by the closing means 510, the plate-shape product forming the closing means 510 has a planner shape preferably formed so as to be substantially the same as the cross sectional shape of the first glass melt flow path 501 in the third conducting pipe structure 200 as shown in Fig. 2. It should be noted that although a gap is present between the closing means 510 and the bottom and side wall surfaces of the first glass melt flow path 501 in the first conducting pipe structure 500 when the closing means 510 is inserted into the first glass melt flow path 501 in the third conducting pipe structure 500, this gap is sufficiently narrow such that the glass melt G is solidified in the course of passing through the gap. As a result, the flow of the glass melt G is shut off in the third conducting pipe structure 500.

When the liquid level of the glass melt G is elevated in the vicinity of the closing means 510 in the third conducting pipe structure 500 such that the height of the liquid level of the glass melt G exceeds the height of the bottom surface of the second glass melt flow path 530 shown in Fig. 2 in the vicinity of the closing means 510 in the third conducting pipe structure 500, the glass melt G is allowed to pass through the second glass melt flow path 530. In Fig. 2, the dashed line indicates the upper limit of the liquid level of the glass melt G in normal operation of the vacuum degassing apparatus 300 while the dashed dotted line indicates the liquid level of the glass melt G in the event of loss of depressurization. As clearly understood from the above explanation, the second glass melt flow path 530 serves as a glass melt flow path for emergencies in the case of the third conducting pipe structure 500 shown in Figs. 2 and 3.

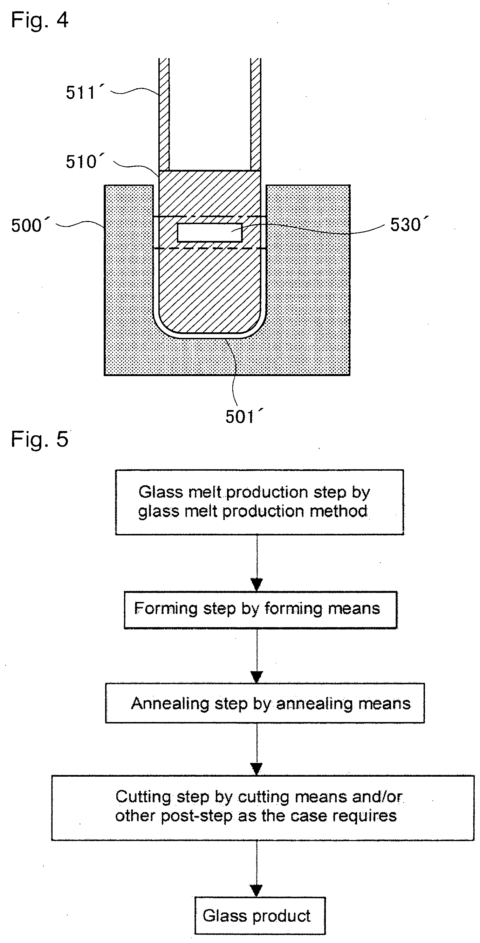

In the glass melt production apparatus according to the present invention, the glass melt flow path for emergencies in the third conducting pipe structure may have a different structure from that shown in Figs 2 and 3. Fig. 4 shows such a different structure of the glass melt flow path for emergencies in the third conducting pipe structure.

In Fig. 4, a closing means 510' is the same as the closing means 510 shown in Figs. 2 and 3 in that the closing means 510' is a plate-shape product and has a planar shape formed so as to be substantially the same as a first glass melt flow path 501' of a third conducting pipe structure 500'. The third conducting pipe structure 500' is, however, different from the closing means 510 shown in Figs. 2 and 3 in that the third conducting pipe structure 500' has only the first glass melt flow path 501' and that the plate-shape product forming the closing means 510' has an opening 530' formed therein.

In Fig. 4, when the liquid level of the glass melt G is elevated in the vicinity of the closing means 510' in the third conducting pipe structure 500' such that the liquid level of the glass melt G in the third conducting pipe structure 500' in the vicinity of the closing means 510' exceeds the bottom side of the opening 530' formed in the plate-shape product forming the closing means 510', the glass melt G is allowed to pass through the opening 530'. In Fig. 4, a dashed line indicates the upper limit of the liquid level of the glass melt G in normal operation of the vacuum degassing apparatus 300 while a dashed dotted line indicates the liquid level of the glass melt G in the event of loss of depressurization in the vacuum degassing apparatus 300. As clearly understood from the above explanation, the opening 530' formed in the plate-shape product as the closing means 510' serves as the glass melt flow path for emergencies in Fig. 4. Although explanation of Fig. 4 has been made about a case where the opening 530' is formed at a single position and has a rectangular shape, the present invention is not limited to this case. It is sufficient that the opening as the glass melt flow path for emergencies has a bottom side located at a higher level than the liquid level of the glass melt G in normal operation of the vacuum degassing apparatus 300 and at a lower level than the liquid level of the glass melt G in the event of loss of depressurization in the vacuum degassing apparatus 300. The shape, the dimensions, the number and so on of the opening may be appropriately selected.

In Fig. 4, the closing means 510' is the same as the closing means 510 shown in Figs. 2 and 3 in that the closing means 510' has an operating member 511' formed on a top portion, and that the plate-shape product forming the closing means 510' is made of a refractory material. The same is true with the operation procedure of the closing means 510' at the time of setting up the vacuum degassing apparatus 300 or a normal operation of the vacuum degassing apparatus 300.

As stated earlier, when a large amount of the glass melt G is introduced into the third conducting pipe structure 500 through the glass melt flow path for emergencies 540 formed in the closing means 520, the introduced amount of the glass melt could exceed the capacity of the third conducting pipe structure 500 such that the glass melt G overflows. In order to prevent the glass melt G from overflowing in the third conducting pipe structure 500, it is preferred to dispose a drain-out system for the glass melt G in the third conducting pipe structure 500. Such a drain-out system is preferred to function, depending on the height of the liquid level of the glass melt G in the third conducting pipe structure 500. The drain-out system functioning according to the height of the liquid level of the glass melt G in the third conducting pipe structure 500 may be an opening formed in a side wall of the third conducting pipe structure 500 at a certain height, or such an opening with a glass melt flow path connected thereto for drain-out, for example.

As the drain-out system for the glass melt G introduced into the third conducting pipe structure 500, a manually operated drain-out system may be disposed in a side wall or a bottom of the third conducting pipe structure 500. The drain-out system is configured such that the opening formed in the side wall or bottom of the third conducting pipe structure 500 is kept plugged for emergencies while the opening is unplugged to drain-out the glass melt G in normal operation.

There are no particular limitations to the position to form the drain-out system and to the number of the drain-out systems formed in the third conducting pipe structure 500. These matters may be appropriately selected as needed. For example, the drain-out system may be disposed between the closing means 510 and the closing means 520, the drain-out system may be disposed upstream the closing means 510, or the drain-out system may be disposed downstream the closing means 520.

The features of the glass melt production apparatus according to the present invention, which reduces the influence caused by flow-down of a glass melt from a vacuum degassing vessel in event of loss of depressurization, has been described as above.

The glass melt production apparatus according to the present invention is preferred to further include a system for reducing an influence caused by loss of depressurization. The system for reducing an influence caused by loss of depressurization may be, for example, configured as follows:
As stated earlier, the vacuum degassing apparatus 300 shown in Fig. 1 maintains the pressure in the vacuum degassing vessel 320 at a predetermined pressure by vacuum suction of the vacuum housing 310 by use of, e.g. a vacuum pump (not shown). When the means for vacuum suction of the vacuum housing 310 is a vacuum pump, the vacuum pump and the vacuum housing 310 are connected together by a pipe. When a shut-off valve is disposed in the pipe between the vacuum pump and the vacuum housing, the shut-off valve can be shut off to reduce the influence caused by the event of loss of depressurization in a case where a trouble is caused in the vacuum pump.

When a tank is disposed in the pipe between the vacuum pump and the vacuum housing 310 to be kept in vacuum by driving the vacuum pump, the tank can be substituted for the vacuum pump to reduce the influence caused by the event of loss of depressurization in a case where a trouble is caused in the vacuum pump. When the tank is disposed in the pipe between the vacuum pump and the vacuum housing 310 to be kept in vacuum by driving the vacuum pump, it is preferred to dispose a shut-off valve of the pipe between the tank and the vacuum housing 310.

Now, the glass melt production method according to the present invention will be described.

The glass melt production method according to the present invention utilizes the glass melt production apparatus described above.

In the glass melt production method according to the present invention, the glass melt G flows into the upstream pit 210 from the melting vessel 100 through the first conducting pipe structure 200 with the inside of the vacuum degassing vessel 320 kept in a certain degree of depressurization, followed by being drawn up through the uprising pipe 330 into the vacuum degassing vessel 320. In the vacuum degassing vessel 320, the glass melt G is degassed. The glass melt G after degassing descends through the downfalling pipe 340 and is discharged into the downstream pit 410. In such a manner, high quality glass melt G with less bubbles can be obtained.

When the event of loss of depressurization occurs due to, e.g. a trouble in a vacuum pump such that the glass melt G in the vacuum degassing vessel 320 flows down into the downstream pit 410 through the downfalling pipe 340, the glass melt G flowing down into the downstream pit 410 is introduced into the third conducting pipe structure 500 through the glass melt flow path for emergencies 540 disposed in the vicinity of the closing means 520 in the third conducting pipe structure 500 or formed in the closing means. For example, it is possible to reduce the move of the glass melt by allowing the glass melt to pass through the glass melt flow path for emergencies, depending on the height of the liquid level of the glass melt flowing the glass melt flow path for emergencies. Thus, flow control is performed to reduce the move of the glass melt G from the downstream pit 410 further downstream beyond the downstream pit.

There is no limitation to the composition of the glass melt so long as the glass melt produced by the glass melt production method according to the present invention is a glass melt produced by a heat melting method. From this point of view, the glass melt may be soda lime glass or alkali-free glass, or may be mixed alkali glass, such as alkali borosilicate glass.

The amount of production of the glass melt is preferably from 100 to 1,000 ton/day, and considering a change in the type of the glass, incidental equipment etc., it is more preferably from 300 to 800 ton/day, further preferably from 350 to 700 ton/day.

Now, the glass product production apparatus according to the present invention will be described.

The glass product production apparatus according to the present invention comprises the above-described glass melt production apparatus according to the present invention, a forming means to form a glass melt into a formed product, and an annealing means to anneal the formed product to obtain a glass product. The forming means and the annealing means may be known ones. For example, as the forming means, an apparatus by a float process, a fusion process, a slot down process, a roll-forming process, a roll-out process, a pull-up process or a down draw process may be mentioned. Among them, a forming means employing a float bath for the float process is preferred in that high quality plate glass having a wide range of thicknesses from thin plate glass to thick plate glass can be produced in a large amount. As the annealing means, for example, an annealing furnace equipped with a transport roll as a mechanism to transport glass after forming, and a mechanism to gradually reduce the temperature of the glass after forming is commonly employed. The mechanism to gradually reduce the temperature supplies a combustion gas or heat controlled by an electric heater to a necessary position in the furnace to gradually cool (that is, to anneal) the glass after forming. Thus, the residual stress inherent in the glass after forming can be eliminated.

The glass product production method according to the present invention comprises a step of producing a glass melt by the above-described glass melt production method according to the present invention (glass melt production step), a step of forming the glass melt into a formed product (forming step) and a step of annealing the glass after forming (annealing step).

Fig. 5 is a flow chart illustrating an embodiment of the glass product production method of the present invention. Fig. 5 further illustrates a cutting step and other post-step conducted as the case requires, in addition to the glass melt production step, the forming step and the annealing step which are essential in the glass product production method according to the present invention. For example, in a case where a glass plate is to be produced as a glass product, the glass melt is formed into a glass ribbon in the forming step, which is cut into a desired size in the cutting step, and a post-step of polishing a glass edge is conducted as the case requires, to obtain a glass plate.

In accordance with the glass melt production apparatus and the glass melt production method according to the present invention, in the event of loss of depressurization, it is possible to reduce the move of a glass melt downstream from the downstream pit by introducing the glass melt into the third conducting pipe structure out of use in normal operation of the glass melt production apparatus after the glass melt flows down from the vacuum degassing vessel into the downstream pit. Even if the glass melt moves downstream from the downstream pit in a large volume, it is possible to prevent the glass melt from overflowing in a case where the downstream pit etc. has no drain-out system equipped therewith, or a case where the flow-down amount of the glass melt exceeds the processing capacity of the drain-out system equipped with the successive treatment vessel.

In accordance with the glass melt production apparatus and the glass melt production method according to the present invention, it is possible to open the glass melt flow path for emergencies for introducing the glass melt into the third conducing pipe structure, depending on the height of a liquid level of the glass melt in the vicinity of the closing means for shutting off the flow of the glass melt in the third conducting pipe structure.

The glass melt production apparatus, the glass melt production method, the glass product production apparatus and the glass product production method according to the present invention are widely applicable to the production of glass for construction, glass for a vehicle, optical glass, glass for medical application, glass for a display and another general glass product.

### REFERENCE SYMBOLS

1: vacuum degassing apparatus, 11: vacuum housing, 12: vacuum degassing vessel, 13: uprising pipe, 14: downfalling pipe, 15: heat-insulating material, 2: melting vessel, 3: upstream pit, 4: downstream pit, 100: melting vessel, 200: first conducting pipe structure, 210: upstream pit, 300: vacuum degassing apparatus, 310: vacuum housing, 311: suction port, 320: vacuum degassing vessel, 321 and 322: suction port, 330: uprising pipe, 340: downfalling pipe, 350: extension pipe (for connection with uprising pipe), 360: extension pipe (for connection with downfalling pipe), 390: heat-insulating material, 400: second conducting pipe structure, 410: downstream pit, 500 and 500': third conducting pipe structure, 501 and 501': first glass melt flow path, 510, 510' and 520: closing means, 511 and 511': operating member, 530 and 540: glass melt flow path for emergencies (second glass melt flow path), 530': glass melt flow path for emergencies (opening).

## Claims

1. A glass melt production apparatus, which comprises a melting vessel (100), a vacuum degassing apparatus (300), a first conducting pipe structure (200) connecting the melting vessel (100) and the vacuum degassing apparatus (300), and a second conducting pipe structure (400) to introduce a glass melt (G) to a forming means, provided downstream the vacuum degassing apparatus (300); the vacuum degassing apparatus (300) having an uprising pipe (330) through which the glass melt (G) from the melting vessel (100) ascends, a vacuum degassing vessel (320), and a downfalling pipe (340) through which the glass melt (G) from the vacuum degassing vessel (320) descends;
the first conducting pipe structure (200) having an upstream pit (210) to supply the glass melt (G) to the uprising pipe (330); and
the second conducting pipe structure (400) having a downstream pit (410) containing the glass melt (G) from the downfalling pipe (340);
the glass melt production apparatus further comprising a third conducting pipe structure (500) connecting the upstream pit (210) and the downstream pit (410); and
the third conducting pipe structure (500) having a closing means (510, 520) to shut off a flow of the glass melt (G) in the third conducting pipe structure (500); the third conducting pipe structure (500) or the closing means (510, 520) having a glass melt flow path for emergencies (530, 540), which allows the glass melt (G) to pass therethrough and further guide the glass melt (G) to the upstream pit (210), depending on the height of a liquid level of the glass melt (G) in the third conducting pipe structure (500) in the vicinity of the closing means (510, 520).

2. The glass melt production apparatus according to Claim 1, wherein a glass melt flow path in each of the uprising pipe (330), the vacuum degassing vessel (320) and the downfalling pipe (340) are made of a refractory material.

3. The glass melt production apparatus according to Claim 1 or 2, wherein the third conducting pipe structure (500) is partly configured in a stepped structure in a direction of the flow of the glass melt (G) to have a first glass melt flow path (501) and a second glass melt flow path (530) having different bottom heights, that the closing means (510) comprises a plate-shape product insertable/removable into/from the first glass melt flow path (501) of the third conducting pipe structure (500), that the plate-shape product has a planar shape formed in substantially the same as the cross sectional shape of the first glass melt flow path (501), and that the second glass melt flow path (530) serves as the glass melt flow path for emergencies (530).

4. The glass melt production apparatus according to Claim 1 or 2, wherein the third conducting pipe structure (500') has a first glass melt flow path (501'), that the closing means (510') comprises a plate-shape product insertable/removable into/from the first glass melt flow path (501') of the third conducting pipe structure (500'), that the plate-shape product has a planar shape formed in substantially the same as the cross sectional shape of the first glass melt flow path (501'), and that the plate-shape product has an opening (530') formed therein so as to serve as the glass melt flow path for emergencies (530').

5. The glass melt production apparatus according to any one of Claims 1 to 4, wherein the glass melt production apparatus further comprises a drain-out system in the third conducting pipe structure (500), which works, depending on the height of a liquid level of the glass melt (G) in the third conducting pipe structure (500).

6. The glass melt production apparatus according to any one of Claims 1 to 5, wherein the vacuum degassing vessel (320) is configured to be depressurized therein through a pipe by use of a vacuum pump, and that a shut-off valve is disposed in the pipe connecting the vacuum pump and the vacuum degassing vessel (320).

7. The glass melt production apparatus according to any one of Claims 1 to 5, wherein the vacuum degassing vessel (320) is configured to be depressurized therein through a pipe by use of a vacuum pump, that a tank is disposed so as to be kept depressurized therein by driving the vacuum pump, and that a shut-off valve is disposed in a pipe connecting the tank and the vacuum degassing vessel (320).

8. A glass product production apparatus comprising the glass melt production apparatus recited in any one of Claims 1 to 7, a forming means to form the glass melt (G) into a formed product, and an annealing means to anneal the formed product to obtain a glass product.

9. A glass melt production method, which employs a glass melt production apparatus comprising a melting vessel (100), a vacuum degassing apparatus (300), a first conducting pipe structure (200) connecting the melting vessel (100) and the vacuum degassing apparatus (300), and a second conducting pipe structure (400) to introduce a glass melt (G) to a forming means, provided downstream the vacuum degassing apparatus (300);
the vacuum degassing apparatus (300) having an uprising pipe (330) through which the glass melt (G) from the melting vessel (100) ascends, a vacuum degassing vessel (320), and a downfalling pipe (340) through which the glass melt (G) from the vacuum degassing vessel (320) descends;
the first conducting pipe structure (200) having an upstream pit (210) to supply the glass melt (G) to the uprising pipe (330); and
the second conducting pipe structure (400) having a downstream pit (410) containing the glass melt (G) from the downfalling pipe (340);
the glass melt production apparatus further comprising a third conducting pipe structure (500) connecting the upstream pit (210) and the downstream pit (410); the third conducting pipe structure (500) having a closing means (510, 520) to shut off a flow of the glass melt (G) in the third conducting pipe structure (500); and the third conducting pipe structure (500) or the closing means (510, 520) having a glass melt flow path for emergencies (530, 540), which allows the glass melt (G) to pass therethrough and further guide the glass melt (G) to the upstream pit (210), depending on the height of a liquid level of the glass melt (G) in the third conducting pipe structure (500) in the vicinity of the closing means (510, 520);
the glass melt production method comprising introducing the glass melt (G) to the third conducting pipe structure (500) when the glass melt (G) flows down through the uprising pipe (330) and the downfalling pipe (340) by a decrease in the degree of depressurization in the vacuum degassing vessel (320) during production of the glass melt (G), and performing flow control to reduce the move of the glass melt (G) from the downstream pit (410) further downstream beyond the downstream pit (410).

10. The glass melt production method according to Claim 9, wherein the glass melt (G) passes through a glass melt flow path for emergencies (530, 540), depending on the height of a liquid level of the glass melt (G), to reduce the move of the glass melt (G).

11. A glass product production method comprising a step of producing a glass melt (G) by use of the glass melt production method recited in Claim 9 or 10, a step of forming the glass melt (G) into a formed product, and a step of annealing the formed product to obtain a glass product.

## Patentansprüche

1. Glasschmelzeherstellungsvorrichtung, welche ein Schmelzbehältnis (100), eine Vakuumentgasungsvorrichtung (300), eine erste Rohrleitungsstruktur (200), welche das Schmelzbehältnis (100) und die Vakuumentgasungsvorrichtung (300) verbindet, und eine zweite Rohrleitungsstruktur (400) zum Einführen einer Glasschmelze (G) in ein Formungsmittel, welches stromabwärts in Bezug auf die Vakuumentgasungsvorrichtung (300) bereitgestellt ist, umfasst; wobei die Vakuumentgasungsvorrichtung (300) ein Steigrohr (330), durch welches die Glasschmelze (G) aus dem Schmelzbehältnis (100) nach oben steigt, ein Vakuumentgasungsbehältnis (320) und ein Fallrohr (340), durch welches die Glasschmelze (G) aus dem Vakuumentgasungsbehältnis (320) nach unten steigt, aufweist;
die erste Rohrleitungsstruktur (200) einen stromaufwärts gelegenen Schacht (210) zum Beschicken des Steigrohrs (330) mit der Glasschmelze (G) aufweist; und
die zweite Rohrleitungsstruktur (400) einen stromabwärts gelegenen Schacht (410), enthaltend die Glasschmelze (G) aus dem Fallrohr (340), aufweist;
die Glasschmelzeherstellungsvorrichtung weiter eine dritte Rohrleitungsstruktur (500), welche den stromaufwärts gelegenen Schacht (210) und den stromabwärts gelegenen Schacht (410) verbindet, umfasst; und
die dritte Rohrleitungsstruktur (500) ein Schließmittel (510, 520) zum Abschalten eines Flusses der Glasschmelze (G) in der dritten Rohrleitungsstruktur (500) aufweist; die dritte Rohrleitungsstruktur (500) oder das Schließmittel (510, 520) einen Glasschmelzedurchfluss für Notfälle (530, 540), welcher es der Glasschmelze (G) gestattet, durch diesen hindurchzutreten, und weiter die Glasschmelze (G) in Abhängigkeit der Höhe eines Flüssigkeitsstandes der Glasschmelze (G) in der dritten Rohrleitungsstruktur (500) in der Nähe des Schließmittels (510, 520) zu dem stromaufwärts gelegenen Schacht (210) führt, aufweist.

2. Glasschmelzeherstellungsvorrichtung nach Anspruch 1, wobei ein Glasschmelzedurchfluss in jeweils dem Steigrohr (330), dem Vakuumentgasungsbehältnis (320) und dem Fallrohr (340) aus einem feuerfesten Material gebildet ist.

3. Glasschmelzeherstellungsvorrichtung nach Anspruch 1 oder 2, wobei die dritte Rohrleitungsstruktur (500) teilweise in einer gestuften Struktur in einer Flussrichtung der Glasschmelze (G) eingerichtet ist, um einen ersten Glasschmelzedurchfluss (501) und einen zweiten Glasschmelzedurchfluss (530) mit unterschiedlichen Bodenhöhen aufzuweisen, wobei das Schließmittel (510) ein plattenförmiges Erzeugnis, welches einsetzbar/entfernbar in den/von dem ersten Glasschmelzedurchfluss (501) der dritten Rohrleitungsstruktur (500) ist, umfasst, wobei das plattenförmige Erzeugnis eine planare Form, welche im Wesentlichen genauso geformt ist wie die Querschnittsform des ersten Glasschmelzedurchflusses (501), aufweist und wobei der zweite Glasschmelzedurchfluss (530) als der Glasschmelzedurchfluss für Notfälle (530) dient.

4. Glasschmelzeherstellungsvorrichtung nach Anspruch 1 oder 2, wobei die dritte Rohrleitungsstruktur (500') einen ersten Glasschmelzedurchfluss (501') aufweist, wobei das Schließmittel (510') ein plattenförmiges Erzeugnis, welches einsetzbar/entfernbar in den/von dem ersten Glasschmelzedurchfluss (501') der dritten Rohrleitungsstruktur (500') ist, umfasst, wobei das plattenförmige Erzeugnis eine planare Form, welche im Wesentlichen genauso geformt ist wie die Querschnittsform des ersten Glasschmelzedurchflusses (501'), aufweist und wobei das plattenförmige Erzeugnis eine darin gebildete Öffnung (530') aufweist, um auf diese Weise als der Glasschmelzedurchfluss für Notfälle (530') zu dienen.

5. Glasschmelzeherstellungsvorrichtung nach einem der Ansprüche 1 bis 4, wobei die Glasschmelzeherstellungsvorrichtung weiter ein Abflusssystem in der dritten Rohrleitungsstruktur (500), welche in Abhängigkeit der Höhe eines Flüssigkeitsstandes der Glasschmelze (G) in der dritten Rohrleitungsstruktur (500) arbeitet, umfasst.

6. Glasschmelzeherstellungsvorrichtung nach einem der Ansprüche 1 bis 5, wobei das Vakuumentgasungsbehältnis (320) eingerichtet ist, um durch ein Rohr unter Verwendung einer Vakuumpumpe darin drucklos gemacht zu werden, und wobei ein Absperrventil in dem Rohr, welches die Vakuumpumpe und das Vakuumentgasungsbehältnis (320) verbindet, angeordnet ist.

7. Glasschmelzeherstellungsvorrichtung nach einem der Ansprüche 1 bis 5, wobei das Vakuumentgasungsbehältnis (320) eingerichtet ist, um durch ein Rohr unter Verwendung einer Vakuumpumpe darin drucklos gemacht zu werden, wobei ein Behälter derart angeordnet ist, um durch Antrieb der Vakuumpumpe darin drucklos gehalten zu werden, und wobei ein Absperrventil in einem Rohr, welches den Behälter und das Vakuumentgasungsbehältnis (320) verbindet, angeordnet ist.

8. Glaserzeugnisherstellungsvorrichtung, umfassend die Glasschmelzeherstellungsvorrichtung nach einem der Ansprüche 1 bis 7, ein Formungsmittel zum Formen der Glasschmelze (G) in ein geformtes Erzeugnis und ein Ausglühungsmittel zum Ausglühen des geformten Erzeugnisses, um ein Glaserzeugnis zu erhalten.

9. Glasschmelzeherstellungsverfahren, welches eine Glasschmelzeherstellungsvorrichtung, umfassend ein Schmelzbehältnis (100), eine Vakuumentgasungsvorrichtung (300), eine erste Rohrleitungsstruktur (200), welche das Schmelzbehältnis (100) und die Vakuumentgasungsvorrichtung (300) verbindet, und eine zweite Rohrleitungsstruktur (400) zum Einführen einer Glasschmelze (G) in ein Formungsmittel, welches stromabwärts in Bezug auf die Vakuumentgasungsvorrichtung (300) bereitgestellt ist, nutzt; wobei
die Vakuumentgasungsvorrichtung (300) ein Steigrohr (330), durch welches die Glasschmelze (G) aus dem Schmelzbehältnis (100) nach oben steigt, ein Vakuumentgasungsbehältnis (320) und ein Fallrohr (340), durch welches die Glasschmelze (G) aus dem Vakuumentgasungsbehältnis (320) nach unten steigt, aufweist;
die erste Rohrleitungsstruktur (200) einen stromaufwärts gelegenen Schacht (210) zum Beschicken des Steigrohrs (330) mit der Glasschmelze (G) aufweist; und
die zweite Rohrleitungsstruktur (400) einen stromabwärts gelegenen Schacht (410), enthaltend die Glasschmelze (G) aus dem Fallrohr (340), aufweist;
die Glasschmelzeherstellungsvorrichtung weiter eine dritte Rohrleitungsstruktur (500), welche den stromaufwärts gelegenen Schacht (210) und den stromabwärts gelegenen Schacht (410) verbindet, umfasst;
die dritte Rohrleitungsstruktur (500) ein Schließmittel (510, 520) zum Abschalten eines Flusses der Glasschmelze (G) in der dritten Rohrleitungsstruktur (500) aufweist; und die dritte Rohrleitungsstruktur (500) oder das Schließmittel (510, 520) einen Glasschmelzedurchfluss für Notfälle (530, 540), welcher es der Glasschmelze (G) gestattet, durch diesen hindurchzutreten, und weiter die Glasschmelze (G) in Abhängigkeit der Höhe eines Flüssigkeitsstandes der Glasschmelze (G) in der dritten Rohrleitungsstruktur (500) in der Nähe des Schließmittels (510, 520) zu dem stromaufwärts gelegenen Schacht (210) führt, aufweist;
das Glasschmelzeherstellungsverfahren das Einführen der Glasschmelze (G) in die dritte Rohrleitungsstruktur (500), wenn die Glasschmelze (G) durch das Steigrohr (330) und das Fallrohr (340) infolge einer Abnahme des Druckablassgrades in dem Vakuumentgasungsbehältnis (320) während der Herstellung der Glasschmelze (G) hinabfließt, und das Durchführen einer Flussregulierung zum Verringern der Bewegung der Glasschmelze (G) aus dem stromabwärts gelegenen Schacht (410) weiter stromabwärts über den stromabwärts gelegenen Schacht (410) hinaus, umfasst.

10. Glasschmelzeherstellungsverfahren nach Anspruch 9, wobei die Glasschmelze (G) in Abhängigkeit der Höhe eines Flüssigkeitsstandes der Glasschmelze (G) durch einen Glasschmelzedurchfluss für Notfälle (530, 540) hindurchtritt, um die Bewegung der Glasschmelze (G) zu verringern.

11. Glaserzeugnisherstellungsverfahren, umfassend einen Schritt des Herstellens einer Glasschmelze (G) unter Verwendung des Glasschmelzeherstellungsverfahrens nach Anspruch 9 oder 10, einen Schritt des Formens der Glasschmelze (G) in ein geformtes Erzeugnis und einen Schritt des Ausglühens des geformten Erzeugnisses, um ein Glaserzeugnis zu erhalten.

## Revendications

1. Appareil de production de verre fondu qui comprend un récipient de fonte (100), un appareil de dégazage sous vide (300), une première structure de tuyaux conducteurs (200) connectant le récipient de fonte (100) et l'appareil de dégazage sous vide (300), et une deuxième structure de tuyaux conducteurs (400) pour introduire un verre fondu (G) dans un moyen de gaufrage prévu en aval de l'appareil de dégazage sous vide (300) ;
l'appareil de dégazage sous vide (300) ayant un tuyau montant (330) à travers lequel le verre fondu (G) provenant du récipient de fonte (100) monte, un récipient de dégazage sous vide (320) et un tuyau descendant (340) à travers lequel le verre fondu (G) provenant du récipient de dégazage sous vide (320) descend ;
la première structure de tuyaux conducteurs (200) ayant une fosse amont (210) pour fournir le verre fondu (G) au tuyau montant (330) ; et
la deuxième structure de tuyaux conducteurs (400) ayant une fosse aval (410) contenant le verre fondu (G) provenant du tuyau descendant (340) ;
l'appareil de production de verre fondu comprenant en outre une troisième structure de tuyaux conducteurs (500) connectant la fosse amont (210) et la fosse aval (410) ; et
la troisième structure de tuyaux conducteurs (500) ayant un moyen de fermeture (510, 520) pour fermer un écoulement du verre fondu (G) dans la troisième structure de tuyaux conducteurs (500) ;
la troisième structure de tuyaux conducteurs (500) ou le moyen de fermeture (510, 520) ayant un trajet d'écoulement de verre fondu pour des urgences (530, 540) qui permet au verre fondu (G) de passer à travers lui et guider en outre le verre fondu (G) vers la fosse amont (210) en fonction de la hauteur d'un niveau de liquide du verre fondu (G) dans la troisième structure de tuyaux conducteurs (500) à proximité du moyen de fermeture (510, 520).

2. Appareil de production de verre fondu selon la revendication 1, dans lequel un trajet d'écoulement de verre fondu dans chacun du tuyau montant (330), du récipient de dégazage sous vide (320) et du tuyau descendant (340) est réalisé en un matériau réfractaire.

3. Appareil de production de verre fondu selon la revendication 1 ou 2, dans lequel la troisième structure de tuyaux conducteurs (500) est partiellement configurée en une structurée étagée dans une direction de l'écoulement du verre fondu (G) pour avoir un premier trajet d'écoulement de verre fondu (501) et un second trajet d'écoulement de verre fondu (530) ayant différentes hauteurs de fond, que le moyen de fermeture (510) comprend un produit en forme de plaque pouvant être inséré/retiré dans le/du premier trajet d'écoulement de verre fondu (501) de la troisième structure de tuyaux conducteurs (500), que le produit en forme de plaque a une forme plane formée en essentiellement la même que la forme de section transversale du premier trajet d'écoulement de verre fondu (501), et que le second trajet d'écoulement de verre fondu (530) sert de trajet d'écoulement de verre fondu pour des urgences (530).

4. Appareil de production de verre fondu selon la revendication 1 ou 2, dans lequel la troisième structure de tuyaux conducteurs (500') a un premier trajet d'écoulement de verre fondu (501'), que le moyen de fermeture (510') comprend un produit en forme de plaque pouvant être inséré/retiré dans le/du premier trajet d'écoulement de verre fondu (501') de la troisième structure de tuyaux conducteurs (500'), que le produit en forme de plaque a une forme plane formée en essentiellement la même que la forme de section transversale du premier trajet d'écoulement de verre fondu (501'), et que le produit en forme de plaque a une ouverture (530') formée en son sein de manière à servir de trajet d'écoulement de verre fondu pour des urgences (530').

5. Appareil de production de verre fondu selon l'une quelconque des revendications 1 à 4, dans lequel l'appareil de production de verre fondu comprend en outre un système d'évacuation dans la troisième structure de tuyaux conducteurs (500) qui fonctionne en fonction de la hauteur d'un niveau de liquide du verre fondu (G) dans la troisième structure de tuyaux conducteurs (500).

6. Appareil de production de verre fondu selon l'une quelconque des revendications 1 à 5, dans lequel le récipient de dégazage sous vide (320) est configuré pour être dépressurisé en son sein à travers un tuyau en utilisant une pompe à vide, et qu'une soupape d'arrêt est disposée dans le tuyau connectant la pompe à vide et le récipient de dégazage sous vide (320).

7. Appareil de production de verre fondu selon l'une quelconque des revendications 1 à 5, dans lequel le récipient de dégazage sous vide (320) est configuré pour être dépressurisé en son sein à travers un tuyau en utilisant une pompe à vide, qu'un réservoir est disposé de manière à être maintenu dépressurisé en son sein en entraînant la pompe à vide, et qu'une soupape d'arrêt est disposée dans un tuyau connectant le réservoir et le récipient de dégazage sous vide (320).

8. Appareil de production de produit en verre comprenant l'appareil de production de verre fondu selon l'une quelconque des revendications 1 à 7, un moyen de gaufrage pour gaufrer le verre fondu (G) en un produit gaufré, et un moyen de recuisson pour recuire le produit gaufré pour obtenir un produit en verre.

9. Procédé de production de verre fondu qui emploie un appareil de production de verre fondu comprenant un récipient de fonte (100), un appareil de dégazage sous vide (300), une première structure de tuyaux conducteurs (200) connectant le récipient de fonte (100) et l'appareil de dégazage sous vide (300), et une deuxième structure de tuyaux conducteurs (400) pour introduire un verre fondu (G) dans un moyen de gaufrage prévu en aval de l'appareil de dégazage sous vide (300) ;
l'appareil de dégazage sous vide (300) ayant un tuyau montant (330) à travers lequel le verre fondu (G) provenant du récipient de fonte (100) monte, un récipient de dégazage sous vide (320) et un tuyau descendant (340) à travers lequel le verre fondu (G) provenant du récipient de dégazage sous vide (320) descend ;
la première structure de tuyaux conducteurs (200) ayant une fosse amont (210) pour fournir le verre fondu (G) au tuyau montant (330) ; et
la deuxième structure de tuyaux conducteurs (400) ayant une fosse aval (410) contenant le verre fondu (G) provenant du tuyau descendant (340) ;
l'appareil de production de verre fondu comprenant en outre une troisième structure de tuyaux conducteurs (500) connectant la fosse amont (210) et la fosse aval (410) ;
la troisième structure de tuyaux conducteurs (500) ayant un moyen de fermeture (510, 520) pour fermer un écoulement du verre fondu (G) dans la troisième structure de tuyaux conducteurs (500) ;
et la troisième structure de tuyaux conducteurs (500) ou le moyen de fermeture (510, 520) ayant un trajet d'écoulement de verre fondu pour des urgences (530, 540) qui permet au verre fondu (G) de passer à travers lui et guider en outre le verre fondu (G) vers la fosse amont (210) en fonction de la hauteur d'un niveau de liquide du verre fondu (G) dans la troisième structure de tuyaux conducteurs (500) à proximité du moyen de fermeture (510, 520) ;
le procédé de production de verre fondu comprenant introduire le verre fondu (G) dans la troisième structure de tuyaux conducteurs (500) lorsque le verre fondu (G) s'écoule vers le bas à travers le tuyau montant (330) et le tuyau descendant (340) par une diminution du degré de dépressurisation dans le récipient de dégazage sous vide (320) au cours de la production du verre fondu (G), et réaliser une commande d'écoulement pour réduire le déplacement du verre fondu (G) de la fosse aval (410) plus en aval au-delà de la fosse aval (410).

10. Procédé de production de verre fondu selon la revendication 9, dans lequel le verre fondu (G) passe à travers un trajet d'écoulement de verre fondu pour des urgences (530, 540) en fonction de la hauteur d'un niveau de liquide du verre fondu (G) pour réduire le déplacement du verre fondu (G).

11. Procédé de production de produit en verre comprenant une étape de production d'un verre fondu (G) en utilisant le procédé de production de verre fondu selon la revendication 9 ou 10, une étape de gaufrage du verre fondu (G) en un produit gaufré, et une étape de recuisson du produit gaufré pour obtenir un produit en verre.
